(19) Europäisches Patentamt

European Patent Office

Office européen des brevets

(11) EP 0 718 625 B1

(12) EUROPEAN PATENT SPECIFICATION

(45) Date of publication and mention
of the grant of the patent:
**11.06.2003 Bulletin 2003/24**

(51) Int Cl.[7]: **G01N 30/48**, C07B 57/00,
B01J 20/32

(21) Application number: **95924517.6**

(22) Date of filing: **06.07.1995**

(86) International application number:
**PCT/JP95/01355**

(87) International publication number:
**WO 96/001995 (25.01.1996 Gazette 1996/05)**

(54) **SEPARATING AGENT**

TRENNMITTEL

AGENT DE SEPARATION

(84) Designated Contracting States:
**CH DE FR GB IT LI**

(30) Priority: **07.07.1994 JP 15559694**

(43) Date of publication of application:
**26.06.1996 Bulletin 1996/26**

(73) Proprietor: **DAICEL CHEMICAL INDUSTRIES,
LTD.
Sakai-shi Osaka-fu 590 (JP)**

(72) Inventor: **MURAKAMI, Tatsushi
Hyogo 671-15 (JP)**

(74) Representative: **Grünecker, Kinkeldey,
Stockmair & Schwanhäusser Anwaltssozietät
Maximilianstrasse 58
80538 München (DE)**

(56) References cited:
**EP-A- 0 527 235          JP-A- 6 279 476
JP-A- 6 329 561          JP-A- 62 230 740
US-A- 5 302 633**

• **PATENT ABSTRACTS OF JAPAN vol. 13, no. 532
(C-659) & JP-A-01 216943 (MITSUI TOATU
CHEM. ), 30 August 1989,**
• **PATENT ABSTRACTS OF JAPAN vol. 17, no. 704
(C-1146) & JP-A-05 239103 (DAICEL CHEM), 17
September 1993,**

## Description

The present invention relates to a separating agent useful for the optical resolutions of racemic modifications.

It has been known that a column packing comprising a polysaccharide derivative is useful as a separating agent for optical isomers [see Y. OKAMOTO, M. KAWASHIMA and K. HATADA, J. Am. Chem. Soc., 106, 53 to 57 (1984) and Japanese Patent Publication-B No. 63-12850]. The polysaccharide derivative exhibits an extremely high power of optical resolution of a racemic modification, and is usually supported on a silica gel and widely used for the analysis or separation and collection of optical isomers.

EP-A-527235 relates to a polysaccharide having a number-average degree of polymerization of 5 or above, preferably 10 or above and the upper limit being 2000, preferably 500.

In US-A-5,302,633 it is disclosed that the cellulose to be used in this document for the preparation of the cellulose derivative has a number-average degree of polymerization of 100 or below. A respective characterization of the starting material can be found in the first two lines of Example 1.

JP-A-01-216943 relates to a "high polymer substance having optical resolving ability.

In JP-A-05-239103 reference is made to a polygalactosamine having a number average molecular weight (in terms of the average number of pyranose rings contained in one molecular) of not more than 500.

However, the polysaccharide derivatives in the prior art have problems that polysaccharide derivatives having a low molecular weight are eluted from the column, since the derivatives have a broad molecular weight distribution, that the steadiness of the base line is poor during the operation of the column and that the range of the solvents usable as the eluent is narrow (namely, the types of the solvents are limited).

Therefore, an object of the present invention is to provide a separating agent comprising a polysaccharide derivative that the base line is very steady during the operation of the column, that low-molecular weight polysaccharide derivatives do not elute therefrom and that various solvents (eluents) can be used therefor, at the same time.

The present inventor has made extensive investigations for developing a separating agent that advantageous properties polysaccharide derivatives have are maximally exhibited and that the above-described problems are solved. As a result, the present inventor has attained to the present invention which will be described below.

Thus, the present invention provides a separating agent which comprises a polysaccharide derivative having an Mw/Mn (wherein Mw and Mn represent the weight-average molecular weight calculated as polystyrene and the number-average molecular weight calculated as polystyrene, respectively), which indicates the extent of molecular weight distribution, of 1 to 3.

In other words, the present invention relates to a separating agent comprising a polysaccharide derivative having an Mw/Mn (Mw: the weight-average molecular weight; Mn: the number-average molecular weight (calculated as polystyrene)), which indicates the extent of molecular weight distribution, of 1 to 3.

The present invention further relates to the use of said polysaccharide derivative having an Mw/Mn of 1 to 3 as a separating agent.

A detailed description will now be made on the present invention.

The polysaccharide used in the present invention may be any of a synthetic polysaccharide, a natural polysaccharide and a modified natural polysaccharide so far as it is optically active. As the polysaccharide, those having a high regularity in the bonding manner thereof are preferably used. Examples of the polysaccharides include β-1,4-glucan (cellulose), α-1,4-glucan (amylose, amylopectin), α-1,6-glucan (dextran), β-1,6-glucan (pustulan), β-1,3-glucan (curdlan, shizophyllan), α-1,3-glucan, β-1,2-glucan (crown gall polysaccharide), β-1,4-galactan, β-1,4-mannan, α-1,6-mannan, β-1,2-fructan (inulin), β-2,6-fructan (levan), β-1,4-xylan, β-1,3-xylan, β-1,4-chitosan, β-1,4-N-acetylchitosan (chitin), pullulan, agarose, alginic acid, α-cyclodextrin, β-cyclodextrin and γ-cyclodextrin. In addition, examples of the polysaccharides include also amylose-containing starches. Among them, preferred are cellulose, amylose, β-1,4-chitosan, chitin, β-1,4-mannan, β-1,4-xylan, inulin and curdlan since highly pure products can be easily obtained, and still more preferred are cellulose and amylose.

The average degree of polymerization (average number of pyranose ring or furanose ring contained in one molecule) of the polysaccharide used in the present invention is preferably 5 or more, and still more preferably 10 or more. Although the upper limit of the average degree of polymerization of the polysaccharide is not particularly provided, it is preferably 500 or less, from the viewpoint of easiness of handling.

The polysaccharide to be used as the starting material for the production of the polysaccharide derivative to be used in the present invention is preferably monodisperse. Such a monodisperse polysaccharide can be obtained by synthesizing it by an enzymatic method. To use a natural polysaccharide as the starting material for the polysaccharide derivative of the present invention, it must be highly purified by fractionation, since it has a broad width of the molecular weight distribution.

The polysaccharide derivative used in the present invention is obtained by reacting a polysaccharide with a compound having a functional group reactive with the hydroxyl group of the polysaccharide by a well-known method. Namely, the polysaccharide derivative comprises a polysaccharide bonded to the above-described compound e.g.

through an ester linkage or a urethane linkage.

Examples of the compounds having a functional group reactive with the hydroxyl group include aliphatic, alicyclic, aromatic and heteroaromatic isocyanic acid derivatives, carboxylic acids, esters, acid halides, acid amides, halides, epoxides, aldehydes, alcohols, and other compounds each having a leaving group.

As the polysaccharide derivative, particularly preferred are ester derivatives and carbamate derivatives of polysaccharides.

A high-molecular substance is usually a mixture of homologous polymers. Namely, a high-molecular substance comprises numerous molecules having degrees of polymerization or molecular weights different from each other. A spread of the molecular weight of a high-molecular substance is called as molecular weight distribution, and the extent of the spread is represented by a molecular weight distribution curve. The average molecular weight is classified into weight-average molecular weight (Mw) and number-average molecular weight (Mn). When Ni molecules each having a molecular weight of Mi are present in a unit volume, Mw and Mn are defined by the following equations, respectively:

$$Mw = \Sigma(Mi^2 \cdot Ni)/\Sigma(Mi \cdot Ni),$$

and

$$Mn = \Sigma(Mi \cdot Ni)/\Sigma(Ni).$$

The polysaccharide derivative used in the present invention has a weight-average molecular weight (calculated as polystyrene) of preferably 1,000 to 500,000, still more preferably 20,000 to 500,000.

When the molecular weight distribution is broad, the ratio of the weight-average molecular weight to the number-average molecular weight, Mw/Mn, has a large value. Thus, this value indicates the extent of the molecular weight distribution. Additionally, as the molecular weight distribution of a high-molecular substance becomes more monodisperse, the Mw/Mn becomes closer to 1. The polysaccharide derivative used in the present invention is characterized in that the width of the molecular weight distribution thereof is narrow, i.e., its Mw/Mn is 1 to 3. When the polysaccharide derivative having an Mw/Mn in this range is used as the column packing for a liquid chromatographic column for the separation of optical isomers, no elution of low-molecular polysaccharide derivatives occurs and one of the objects of the present invention can be attained.

In order to use the polysaccharide derivative according to the present invention as the column packing for liquid chromatography, it is packed in a column either as it is or after being supported on a support.

Since the column packing is preferably in the form of granules, the polysaccharide derivative is preferably crushed or shaped into beads, when it is used as the column packing as it is. The size of the particles, which varies depending on the size of the column to be used, i.e., into which the polysaccharide derivative is packed, is usually 1 μm to 10 mm. preferably 1 to 300 μm. In addition, the particles are preferably porous.

For improving the pressure resistance and preventing the shrinkage of the separating agent and for improving the number of theoretical plates, the polysaccharide derivative used in the present invention is preferably supported on a support and used. The size (particle diameter) of a suitable support is usually 1 μm to 10 mm, and preferably 1 μm to 300 μm. The support is preferably porous, and, in such a case, the average pore diameter thereof is preferably 1 nm (10 Å) to 100 μm, still more preferably 5 to 5,000 nm (50 to 50,000 Å). Examples of the materials for the support include inorganic substances, such as silica gel and alumina, and organic substances, such as polystyrene and polyacrylamide. Preferred is silica gel.

During the use of a separating agent comprising the polysaccharide derivative according to the present invention, low-molecular polysaccharide derivatives are scarcely eluted. Further, when the separating agent is packed in a column and used, the operation time in the optical resolution is remarkably reduced, since the base line is highly steady, in other words, since the stabilization time for the base line is short. Furthermore, although the types of the solvents usable as the eluent have been limited for example to hexane, ethanol and propanol, in the conventional optical resolution, solvents other than those mentioned above, in addition to those mentioned above, are also usable as the eluent when the polysaccharide derivative to be used in the present invention is used.

The present invention will now be illustrated with reference to Examples in detail. However, the present invention is not limited by these Examples.

Example 1

<Synthesis of a polysaccharide derivative>

2 g of a synthetic monodisperse amylose [Mw/Mn < 1.1, Mw=24,848 (both Mw and Mn being calculated by the light scattering method/ultracentrifugal sedimentation equilibrium method)] was reacted with 17 g of 3,5-dimethylphenyl isocyanate in pyridine under heating for 30 hours. The obtained reaction product was poured into methanol under stirring to precipitate. The precipitate was recovered by filtration with a G4 glass filter. The obtained substance was washed with methanol twice, and then dried in vacuo at 80°C for 5 hours. Chloroform and dimethylacetamide were added to the obtained product to completely dissolve the same. The obtained solution was poured again into methanol under stirring to precipitate. The precipitate was recovered by filtration with a G4 glass filter. The obtained substance was washed with methanol twice, and then dried in vacuo at 80°C for 5 hours. Thus, amylose tris(3,5-dimethylphenyl carbamate) which was a purified product was obtained. The Mw/Mn of the product was 1.22, while Mw thereof was 55,500 [both Mw and Mn being determined by the differential refractive index determination method (calculated as polystyrene)].

<Support of the polysaccharide derivative on silica gel>

The above amylose tris(3,5-dimethylphenyl carbamate) was dissolved in a mixture of chloroform and dimethylacetamide. The obtained solution was uniformly sprinkled on a carbamoylated silica gel [manufactured by Daiso Co., Ltd., particle diameter: 7 μm, pore diameter: 100 nm (1,000 Å)] and then the solvent was distilled off. Thus, the amylose tris(3,5-dimethylphenylcarbamate) was supported on the silica gel.

<Preparation of an optical resolution column>

The separating agent comprising the amylose tris(3,5-dimethylphenyl carbamate) supported on the silica gel described above was packed in a stainless steel column having a length of 25 cm and an inner diameter of 0.46 cm by the slurry packing procedure. An optical resolution column was thus prepared.

<Evaluation of the performance of the optical resolution column>

An optical resolution experiment of transstilbene oxide as the reference compound was conducted by using the above-described optical resolution column. In the evaluation of the performance, JASCO 875-UV (manufactured by JASCO Corp.) was used, and the conditions, wherein the eluent was a mixture of hexane and 2-propanol [90/10 (v/v)], the flow rate was 1.0 ml/min and the temperature was 25°C, were employed. The results are given in Table 1.
The definitions of the terms in the Table are as follows:

| | |
|---|---|
| separation factor (a): | (volumetric proportion of more strongly adsorbed antipode)/(volumetric proportion of more weakly adsorbed antipode), |
| resolution (Rs): | [2 × (distance between peak of more strongly adsorbed antipode and peak of more weakly adsorbed antipode)]/(sum of band widths of both peaks), |
| stabilization time for base line: | the time taken for the stabilization of the base line from the beginning of the passage of the eluent under such conditions that the base line is judged to have been stabilized when the base line is kept horizontal for 30 minutes with the sensitivity of the UV detector being 0.16 and the full scale of the recorder being 10 mV (for example, when the base line lies horizontal from 30 minutes after the beginning of the passage of the eluent, the stabilization time is 1 hour), and |
| amount of elution: | the amount of the residue obtained by passing a mixture of hexane and ethanol [75/25 (v/v)] as an eluent through the column for 10 hours under such conditions that the flow rate is 1.0 ml/min and the temperature is 40°C, combining the eluates, and concentrating the whole of them. |

Example 2

<Synthesis of a polysaccharide derivative>

Amylose tris(3,5-dimethylphenyl carbamate) was obtained in the same manner as that of Example 1. except that a synthetic monodisperse amylose [Mw/Mn < 1.1, Mw = 27,603 (both Mw and Mn being calculated by the light scattering method/ultracentrifugal sedimentation equilibrium method)] was used. The Mw/Mn of the product was 1.25, while Mw thereof was 54,300 [both Mw and Mn being determined by the differential refractive index determination method (calculated as polystyrene)].

<Support of the polysaccharide derivative on silica gel>

The amylose tris(3.5-dimethylphenyl carbamate) described above was supported on the same silica gel as that used in Example 1 in the same manner as that of Example 1.

<Preparation of an optical resolution column>

An optical resolution column was prepared in the same manner as that of Example 1, except that the separating agent comprising the amylose tris(3,5-dimethylphenyl carbamate) supported on the silica gel described above was used.

<Evaluation of the performance of the optical resolution column>

An optical resolution experiment of transstilbene oxide as the reference compound was conducted with the use of the above-described optical resolution column in the same manner as that of Example 1. The results are given in Table 1.

Example 3

<Synthesis of a polysaccharide derivative>

Amylose tris(3.5-dimethylphenyl carbamate) was obtained in the same manner as that of Example 1, except that a synthetic monodisperse amylose [Mw/Mn < 1.1, Mw = 52,268 (both Mw and Mn being calculated by the light scattering method/ultracentrifugal sedimentation equilibrium method)] was used. The Mw/Mn of the product was 1.47, while Mw thereof was 159,300 [both Mw and Mn being determined by the differential refractive index determination method (calculated as polystyrene)].

<Support of the polysaccharide derivative on silica gel>

The amylose tris(3,5-dimethylphenyl carbamate) described above was supported on the same silica gel as that used in Example 1 in the same manner as that of Example 1.

<Preparation of an optical resolution column>

An optical resolution column was prepared in the same manner as that of Example 1, except that the separating agent comprising the amylose tris(3,5-dimethylphenyl carbamate) supported on the silica gel descrived above was used.

<Evaluation of the performance of the optical resolution column>

An optical resolution experiment of transstilbene oxide as the reference compound was conducted with the use of the above-described optical resolution column in the same manner as that of Example 1. The results are given in Table 1.

<Determination of the amount of elution of low-molecular polysaccharide derivatives>

The separating agent comprising the amylose tris(3,5-dimethylphenyl carbamate) supported on the silica gel described above was packed in a stainless steel column having a length of 25 cm and an inner diameter of 1.0 cm by the slurry packing procedure. An optical resolution column for an elution experiment was thus prepared.
By using the optical resolution column for the elution experiment thus prepared, the amount of elution of low-molecular polysaccharide derivatives was determined in such a manner as that described in the paragraph of the amount of elution in the column of the definition of the terms described above. The results are given in Table 1.

Example 4

<Synthesis of a polysaccharide derivative>

Amylose tris(3,5-dimethylphenyl carbamate) was obtained in the same manner as that of Example 1, except that a synthetic monodisperse amylose [Mw/Nn < 1.1, Mw = 74,510 (both Mw and Mn being calculated by the light scattering method/ultracentrifugal sedimentation equilibrium method)] was used. The Mw/Mn of the product was 2.21, while Mw thereof was 367,600 [both Mw and Mn being determined by the differential refractive index determination method (calculated as polystyrene)].

<Support of the polysaccharide derivative on silica gel>

The amylose tris(3,5-dimethylphenyl carbamate) described above was supported on the same silica gel as that used in Example 1 in the same manner as that of Example 1.

<Preparation of an optical resolution column>

An optical resolution column was prepared in the same manner as that of Example 1, except that the separating agent comprising the amylose tris(3,5-dimethylphenyl carbamate) supported on the silica gel described above was used.

<Evaluation of the performance of the optical resolution column>

An optical resolution experiment of transstilbene oxide as the reference compound was conducted with the use of the above-described optical resolution column in the same manner as that of Example 1. The results are given in Table 1.

Comparative Example 1

<Synthesis of a polysaccharide derivative>

Amylose tris(3,5-dimethylphenyl carbamate) was obtained in the same manner as that of Example 1, except that a natural amylose having a broad molecular weight distribution was used. The Mw/Mn of the product was 5.29, while Mw thereof was 272,700 [both Mw and Mn being determined by the differential refractive index determination method (calculated as polystyrene)].

<Support of the polysaccharide derivative on silica gel>

The amylose tris(3,5-dmethylphenyl carbamate) described above was supported on the same silica gel as that used in Example 1 in the same manner as that of Example 1.

<Preparation of an optical resolution column>

An optical resolution column was prepared in the same manner as that of Example 1, except that the separating agent comprising the amylose tris(3,5-dimethylphenyl carbamate) supported on the silica gel described above was used.

<Evaluation of the performance of the optical resolution column>

An optical resolution experiment of transstilbene oxide as the reference compound was conducted with the use of the above-described optical resolution column in the same manner as that of Example 1. The results are given in Table 1.

<Determination of the amount of elution of low-molecular polysaccharide derivatives>

The separating agent comprising the amylose tris(3,5-dimethylphenyl carbamate) supported on the silica gel described above was packed in a stainless steel column having a length of 25 cm and an inner diameter of 1.0 cm by the slurry packing procedure. An optical resolution column for an elution experiment was thus prepared.

By using the optical resolution column for the elution experiment thus prepared, the amount of elution of low-molecular polysaccharide derivatives was determined in such a manner as that described in the paragraph of the amount of elution in the column of the definition of the terms described above. The results are given in Table 1.

Table 1

|  | Separation factor ($\alpha$) | Resolution (Rs) | Base line stabilization time (hr) | Amount of elution (mg) |
|---|---|---|---|---|
| Ex. 1 | 2.93 | 11.2 | 3.5 |  |
| Ex. 2 | 2.79 | 10.8 | 3.5 |  |
| Ex. 3 | 2.98 | 10.9 | 2.5 | 7.8 |
| Ex. 4 | 2.80 | 9.6 | 2.0 |  |
| Comp. Ex. 1 | 3.05 | 11.6 | 26.0 | 76.6 |

**Claims**

1. A separating agent which comprises a polysaccharide derivative having an Mw/Mn (wherein Mw and Mn represent the weight-average molecular weight calculated as polystyrene and the number-average molecular weight calculated as polystyrene, respectively), which indicates the extent of molecular weight distribution, of 1 to 3.

2. The separating agent according to Claim 1, wherein the polysaccharide derivative has a weight-average molecular-weight, calculated as polystyrene, of 20,000 to 500,000.

3. The separating agent according to Claim 1, wherein the polysaccharide derivative is an ester derivative thereof or a carbamate derivative thereof.

4. The separating agent according to Claim 1, which further comprises a support, and wherein the polysaccharide is supported on the support.

5. The separating agent according to Claim 4, wherein the support is a silica gel having a particle diameter of 1 $\mu$m to 10 mm and a pore diameter of 10 Å to 100 $\mu$m.

6. The separating agent according to Claim 4, which is used as a column packing for liquid chromatography.

7. Use of a polysaccharide derivative having an Mw/Mn (wherein Mw and Mn represent the weight-average molecular weight calculated as polystyrene and the number-average molecular weight calculated as polystyrene, respectively), which indicates the extent of molecular weight distribution, of 1 to 3, as a separating agent.

**Patentansprüche**

1. Trennmittel, umfassend ein Polysaccharidderivat, das ein Mw/Mn (worin Mw und Mn das gewichtsmittlere Molekulargewicht, berechnet als Polystyrol, bzw. das zahlenmittlere Molekulargewicht, berechnet als Polystyrol, bedeuten), welches den Grad der Molekulargewichtsverteilung bezeichnet, von 1 bis 3 aufweist.

2. Trennmittel nach Anspruch 1, worin das Polysaccharidderivat ein gewichtsmittleres Molekulargewicht, berechnet als Polystyrol, von 20.000 bis 500.000 aufweist.

3. Trennmittel nach Anspruch 1, worin das Polysaccharidderivat ein Esterderivat oder ein Carbamatderivat davon ist.

4. Trennmittel nach Anspruch 1, welches außerdem einen Träger umfasst, wobei das Polysaccharaid auf dem Träger aufgetragen ist.

5. Trennmittel nach Anspruch 4, worin der Träger ein Silicagel mit einem Teilchendurchmesser von 1 $\mu$m bis 10 mm

und einem Porendurchmesser von 10 Å bis 100 um ist.

6. Trennmittel nach Anspruch 4, welches als Säulenpackung für die Flüssigchromatographie verwendet wird.

7. Verwendung eines Polysaccharidderivats, das ein Mw/Mn (worin Mw und Mn das gewichtsmittlere Molekulargewicht, berechnet als Polystyrol, bzw. das zahlenmittlere Molekulargewicht, berechnet als Polystyrol, bedeuten), welches den Grad der Molekulargewichtsverteilung bezeichnet, von 1 bis 3 aufweist, als Trennmittel.

**Revendications**

1. Agent de séparation qui comprend un dérivé de polysaccharide ayant un Mp/Mn (où Mp et Mn représentent respectivement la masse moléculaire moyenne en poids, calculée en polystyrène, et la masse moléculaire moyenne en nombre, calculée en polystyrène), qui indique le degré de polydispersité, de 1 à 3.

2. Agent de séparation selon la revendication 1, dans lequel le dérivé de polysaccharide possède une masse moléculaire moyenne en poids, calculée en polystyrène, de 20 000 à 500 000.

3. Agent de séparation selon la revendication 1, dans lequel le dérivé de polysaccharide est un dérivé ester de polysaccharide ou un dérivé carbamate de polysaccharide.

4. Agent de séparation selon la revendication 1, qui comprend en outre un support, et dans lequel le polysaccharide est supporté sur le support.

5. Agent de séparation selon la revendication 4, dans lequel le support est un gel de silice ayant un diamètre de particule de 1 μm à 10 mm et un diamètre de pore de 10 Å à 100 μm.

6. Agent de séparation selon la revendication 4, qui est employé comme garnissage de colonne pour la chromatographie liquide.

7. Utilisation, comme agent de séparation, d'un dérivé de polysaccharide ayant un Mp/Mn (où Mp et Mn représentent respectivement la masse moléculaire moyenne en poids, calculée en polystyrène, et la masse moléculaire moyenne en nombre, calculée en polystyrène), qui indique le degré de polydispersité, de 1 à 3.